**Europäisches Patentamt**

**European Patent Office**

**Office européen des brevets**

(11) Veröffentlichungsnummer: **0 216 051**
**B1**

(12) **EUROPÄISCHE PATENTSCHRIFT**

(45) Veröffentlichungstag der Patentschrift:
**12.07.89**

(51) Int. Cl.⁴: **B23B 29/03**

(21) Anmeldenummer: **86109803.6**

(22) Anmeldetag: **17.07.86**

(54) Werkzeugträger.

(30) Priorität: **19.07.85 DE 3525853**

(43) Veröffentlichungstag der Anmeldung:
**01.04.87 Patentblatt 87/14**

(45) Bekanntmachung des Hinweises auf die Patenterteilung:
**12.07.89 Patentblatt 89/28**

(84) Benannte Vertragsstaaten:
**CH DE LI**

(56) Entgegenhaltungen:
**DE-A- 3 130 229**
**US-A- 2 900 704**

**WT-ZEITSCHRIFT FÜR INDUSTRIELLE FERTIGUNG,
Band 73, Nr. 11, November 1983, Seiten 691-693, Berlin;
U. ZÜRN "Ausbohren mit flexiblem Werkzeugsystem"**

(73) Patentinhaber: **Hahn & Kolb GmbH & Co.,
Königstrasse 14, D-7000 Stuttgart 1(DE)**

(72) Erfinder: **Betz, Wolfgang, Fuchshofweg 9,
D-7060 Schorndorf(DE)**

(74) Vertreter: **Hoeger, Stellrecht & Partner,
Uhlandstrasse 14 c, D-7000 Stuttgart 1(DE)**

**Beschreibung**

Die Erfindung betrifft einen Werkzeugträger, insbesondere für ein Mehrschneidenwerkzeug, mit einer im Gebrauch zu einer Drehbewegung antreibbaren, eine zentrale Befestigungsöffnung, insbesondere eine Gewindebohrung, aufweisenden Grundplatte mit einer Kerbverzahnung an einer Grundplattenfläche, mit einem eine Kerbverzahnung aufweisenden Schneidenträger und mit Verbindungsschrauben zum Herstellen einer starren, lösbaren Verbindung zwischen der Grundplatte und dem Schneidenträger unter Ausnutzung der Positionierwirkung von ineinander greifenden Kerbverzahnungsbereichen, wobei zum Zweck der radialen Verstellung des Schneidenträgers gegenüber der Grundplatte mindestens ein in Verstellrichtung verlaufendes Langloch, welches von einer Verbindungsschraube durchgriffen wird, in einem der zu verbindenden Elemente vorgesehen ist.

Ein derartiger Werkzeugträger ist aus der DE-A 3 130 229 bekannt. Bei dem bekannten Werkzeugträger greifen die Kerbverzahnungen am Grundkörper einerseits und am Schneidenträger andererseits unmittelbar ineinander, und diese Elemente sind mit Hilfe der Verbindungsschrauben auch direkt miteinander verschraubt, wobei in einem der zu verbindenden Elemente mindestens ein Langloch vorgesehen ist, welches eine radiale Verstellung des Schneidenträgers gegenüber der Grundplatte ermöglicht.

Üblicherweise ist der Schneidenträger ferner zur Erreichung einer ausreichenden Stabilität mittels zweier Verbindungsschrauben mit der Grundplatte verbunden, so daß dementsprechend zwei parallele Langlöcher vorgesehen werden.

Es hat sich gezeigt, daß der radiale Verstellweg bei dem bekannten Werkzeugträger begrenzt ist, da eine ausreichende Stabilität der Halterung des Schneidenträgers nur dann erreichbar ist, wenn sich die Kerbverzahnungen von Grundplatte und Schneidenträger auf einer angemessenen Länge überdecken.

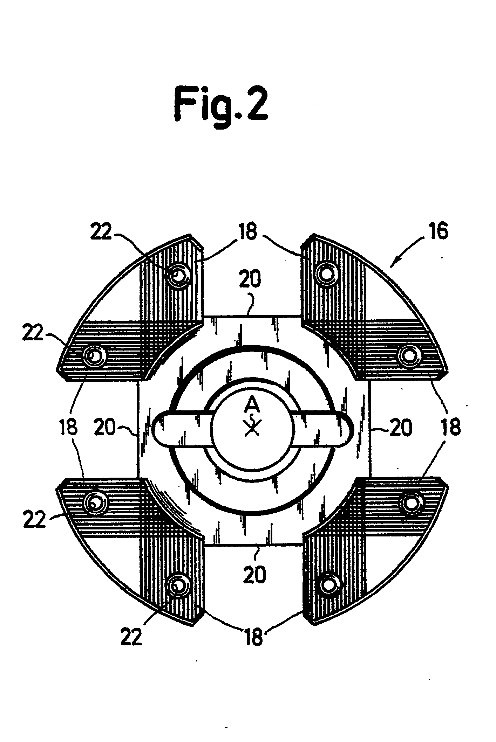

Aus "WT-Zeitschrift für industrielle Fertigung", Band 73, Nr. 11, November 1983, U. Zürn; Seite 692, rechte Spalte, Figur 5, ist ferner ein Großausbohrwerkzeug bekannt, welches eine Brückenaufnahme umfaßt, an der eine als Werkzeugträger dienende Brücke befestigt werden kann, die ihrerseits der Halterung von als Schneidenträger dienenden Schlitten dient. Das bekannte Werkzeug kann durch Verwendung von unterschiedlich langen Brücken an Bohrungen unterschiedlichen Durchmessers angepaßt werden, wobei die Schlitten eine Positionierung der Schneidwerkzeuge auf den gewünschten Radius ermöglichen. Auch bei diesen bekannten Werkzeugen bzw. Werkzeugträgern ist der radiale Verstellweg für die Schlitten begrenzt, da eine ausreichende Stabilität der Halterung der Schlitten nur dann erreichbar ist, wenn sich die Schlitten und das angrenzende Brückenende auf einer angemessenen Länge überlappen.

Ausgehend vom Stand der Technik gemäß der eingangs erwähnten DE-A 3 130 229 liegt der Erfindung die Aufgabe zugrunde, bei einem Werkzeugträger der eingangs angegebenen Art den radialen Verstellweg für den Schneidenträger gegenüber der Grundplatte ohne einen Verlust an Stabilität zu vergrößern.

Diese Aufgabe wird gemäß der Erfindung dadurch gelöst, daß ein plattenförmiges, zwei Hauptflächen aufweisendes Zwischenstück vorgesehen ist, dessen an seiner einen Hauptfläche vorgesehene Kerbverzahnung mit der Kerbverzahnung des Grundkörpers und dessen an seiner anderen Hauptfläche vorgesehene Kerbverzahnung mit der Kerbverzahnung des Schneidenträgers in Eingriff steht, wobei das Zwischenstück einerseits mit der Grundplatte und andererseits mit dem Schneidenträger unabhängig voneinander lösbar verbunden ist.

Es ist ein wichtiger Vorteil des Werkzeugträgers gemäß der Erfindung, daß durch die Verwendung des Zwischenstücks zwei Bereiche vorhanden sind, in denen getrennt voneinander eine radiale Verstellung vorgenommen werden kann, so daß sich der radiale Verstellweg bei gleichbleibender Überdeckungslänge der jeweils zusammen wirkenden Kerbverzahnungen erheblich vergrößern läßt. Zusätzlich ergibt sich der Vorteil, daß der axiale Abstand der Schneide des Schneidenträgers von der der Befestigung desselben dienenden Hauptfläche der Grundplatte durch die Wahl der Dicke des Zwischenstückes variiert werden kann, ohne daß der Schneidenträger selbst in axialer Richtung gegenüber der Grundplatte verstellbar sein müßte.

Wenn gemäß einer bevorzugten Ausführungsform der Erfindung an einer Hauptfläche des Grundplatte mehrere, insbesondere vier durch radiale Kerbverzahnungen gebildete Radialführungen vorgesehen sind, dann besteht beispielsweise die Möglichkeit, die Dicke der Zwischenstücke für einige oder alle Schneidenträger unterschiedlich zu wählen und ein Werkstück gleichzeitig an mehreren, einen axialen Abstand voneinander aufweisenden Positionen zu bearbeiten. Außerdem besteht natürlich nach wie vor die Möglichkeit, den einen oder anderen Schneidenträger ohne Verwendung eines Zwischenstücks direkt an dem Grundplatte zu befestigen.

Grundsätzlich ist es ausreichend, wenn zwischen jeweils zwei der drei miteinander zu verbindenden Elemente - Grundplatte, Zwischenstück, Schneidenträger - eine Langlochverbindung vorgesehen ist, die eine radiale Verstellung ermöglicht, wenn eine entsprechende Anzahl von Zwischenstücken zur Verfügung steht, die nach ihrer Befestigung an dem angrenzenden Bauteil in radialer Richtung jeweils unterschiedlich weit über dieses vorstehen. Der Einfachheit halber wird man jedoch sowohl zwischen dem Schneidenträger und dem Zwischenstück wie auch zwischen der Grundplatte und dem Zwischenstück Langlochverbindungen vorsehen, um eine größere Flexibilität hinsichtlich der radialen Verstellmöglichkeiten zu erreichen, insbesondere im Hinblick auf die Tatsache, daß zur axialen Positionierung vorzugsweise Zwischenstücke mit unterschiedlicher Dicke bereitgehalten werden.

Als besonders vorteilhaft hat es sich in Ausgestaltung der Erfindung ferner erwiesen, wenn jedes Zwischenstück zwei beidseitig mit Kerbverzahnungen versehene Teile aufweist, die über einen in axialer Richtung abgewinkelten Verbindungssteg miteinander verbunden sind, in dem ein Gewinde vorgesehen ist, in welches eine Stellschraube eingeschraubt ist, deren Achse in radialer Richtung verläuft und deren inneres Ende mit einer in axialer Richtung verlaufenden Stützfläche der Grundplatte zusammenwirkt, so daß mit Hilfe der Stellschraube eine Feinjustierung der radialen Position des Zwischenstücks gegenüber der Grundplatte erfolgen kann, ehe die betreffenden Verbindungsschrauben fest angezogen werden.

Üblicherweise wird man bei einem Werkzeugträger gemäß der Erfindung mit Zwischenstücken arbeiten, die zwei zueinander parallele Hauptflächen aufweisen. Grundsätzlich besteht aber auch die Möglichkeit, die mit Kerbverzahnungen versehenen Hauptflächen des Zwischenstücks in radialer Richtung unter einem gewissen Winkle zueinander anzuordnen, derart, daß durch eine entsprechende radiale Positionierung eine axiale Feinjustierung der Schneide des Schneidenträgers erfolgen kann.

Weitere Einzelheiten und Vorteile der Erfindung werden nachstehend anhand von Zeichnungen noch näher erläutert. Es zeigen:

Fig. 1 eine Seitenansicht einer bevorzugten Ausführungsform eines auf einer Werkzeugspindel sitzenden Werkzeugträgers gemäß der Erfindung;

Fig. 2 eine Draufsicht auf die Vorderseite einer Grundplatte des Werkzeugträgers gemäß Fig. 1;

Fig. 3 eine Draufsicht auf die Vorderseite eines Zwischenstücks des Werkzeugträgers gemäß Fig. 1 und

Fig. 4 eine Draufsicht auf die Oberseite des Zwischenstücks gemäß Fig. 3, gesehen in Richtung des Pfeils C in dieser Figur.

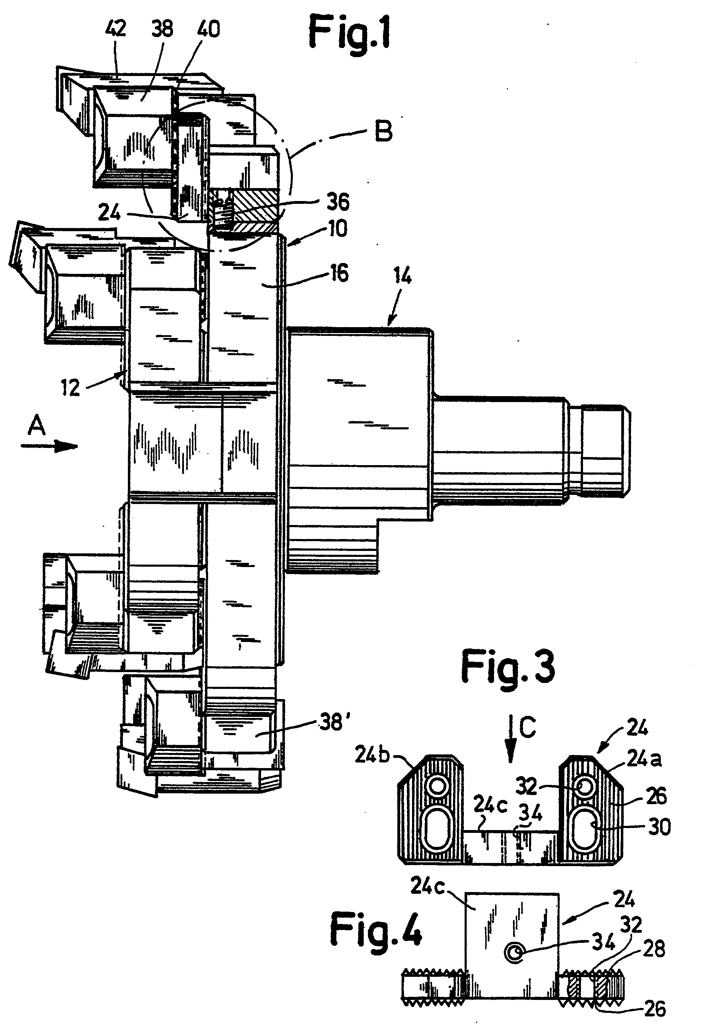

Im einzelnen zeigt Fig. 1 eine Werkzeuganordnung mit zwei Werkzeugträgern 10, 12, von denen der Werkzeugträger 10 gemäß einer bevorzugten Ausführungsform der Erfindung ausgebildet ist, während der Werkzeugträger 12 in konvetioneller Weise ausgebildet ist, wobei die beiden Werkzeugträger 10, 12 in axialer Richtung hintereinander auf einer Werkzeugwelle 14 in üblicher Weise befestigt sind, wie dies beispielsweise in der DE-PS 31 30 229 detailliert beschrieben ist, auf deren Offenbarung hinsichtlich der Befestigung der Werkzeugträger 10, 12 an der Werkzeugspindel 14 hiermit ausdrücklich Bezug genommen wird.

Der Werkzeugträger 10 gemäß der Erfindung umfaßt eine Grundplatte 16, deren in Fig. 1 nach links weisende Vorderseite in Fig. 2 detailliert gezeigt ist. Wie aus Fig. 2 deutlich wird, ist die die Vorderseite der Grundplatte 16 bildende Grundplattenfläche - eine der Hauptflächen der Grundplatte - insgesamt mit vier Kerbverzahnungen 18 versehen, wobei jede der Kerbverzahnungen 18 zwei Felder umfaßt, die jeweils zu beiden Seiten einer der betreffenden Kerbverzahnung 18 zugeordneten Aussparung 20 der Grundplatte 16 liegen. Die Zähne jeder der Kerbverzahnungen 18 verlaufen in einer zur Drehachse A der Grundplatte 16 senkrechten Ebene jeweils parallel zueinander, wobei sich die Zähne benachbarter Kerbverzahnungsbereiche in ihrem radial inneren Teil in bekannter Weise überschneiden, wie dies in Fig. 2 dargestellt ist. In jedem der Teilbereiche jeder der Kerbverzahnungen 18 ist ferner jeweils eine Gewindebohrung 22 vorgesehen.

In Fig. 3 und 4 der Zeichnung ist ein plattenförmiges Zwischenstück 24 dargestellt, dessen in Fig. 1 nach links weisende Vorderseite in Fig. 3 sichtbar ist. Das Zwischenstück 24 ist an seinen beiden Hauptflächen, das heißt an seiner Vorderseite und an seiner in der Gebrauchslage gemäß Fig. 1 der Grundplatte 16 zugewandten Rückseite jeweils mit einer Kerbverzahnung 26 bzw. 28 versehen. Ferner besteht das Zwischenstück 24, wie aus Fig. 1, 3 und 4 deutlich wird, aus zwei plattenförmigen Teilen 24a, 24b, die über einen ebenfalls plattenförmigen Verbindungssteg 24c miteinander verbunden sind, der gegenüber den Teilen 24a, 24b, abgewinkelt ist und in der Gebrauchslage des Zwischenstücks 24 einen in axialer Richtung verlaufenden Schenkel desselben bildet (vgl. Fig. 1), welcher in die zugeordnete Aussparung 20 der Grundplatte 16 eingreift. Jeder der Teile 24a, 24b des Zwischenstücks 24 ist mit einem Langloch 30 und mit einer Gewindebohrung 32 versehen. Ferner ist der Verbindungssteg 24c ebenfalls mit einer Gewindebohrung 34 versehen, deren Achse senkrecht zu den Achsen der Gewindebohrung 32 verläuft und parallel zu den Zähnen der Kerbverzahnungen 26, 28 des Zwischenstücks 24.

Zum Verbinden des Zwischenstücks 24 mit der Grundplatte 16 werden zwei Verbindungsschrauben (nicht dargestellt) verwendet, deren Schaft jeweils eines der Langlöcher 30 durchgreift und die in die Gewindebohrungen 22 eingeschraubt werden, wobei sich der Kopf der Verbindungsschrauben an eine längs des Umfangs der Langlöcher 30 vorgesehene Schulter anlegt, wobei die Lage der Schulter einerseits und die Höhe des Kopfes der Verbindungsschrauben andererseits so gewählt sind, daß die freie Stirnfläche des Kopfes auf jeden Fall unter dem tiefsten Punkt der vorderen Verzahnung 26 liegt. Sobald das Zwischenstück 24 mit Hilfe der Verbindungsschrauben lose an der Grundplatte 16 fixiert ist, so daß die Kerbverzahnungen 18, 28 ineinander greifen, wird in die Gewindebohrung 34 des Verbindungssteges 24c eine Stellschraube 36 (Fig. 1) so weit eingeschraubt, daß sich durch das Zusammenwirken des freien Endes der Stellschraube 36 und der Grundfläche der Aussparung 20 an der Grundplatte 16 die gewünschte radiale Position des Zwischenstücks 24 bezüglich der Grundplatte 16 ergibt. Anschließend werden die in die Gewindebohrungen 22 eingreifenden Verbindungsschrauben festgezogen. Wie aus Fig. 1 deutlich wird, ist auf der Vorderseite - der linken Seite in Fig. 1 - des Zwischenstücks 24 ein Schneidenträger 38 montiert, der an seiner dem Zwischenstück 24 zugewandten Rückseite eine Kerbverzahnung 40 aufweist, die zum Zusammenwirken mit der vorderen Kerbverzahnung 26 des Zwischenstücks 24 bestimmt ist. Zur Befestigung des Schneidenträgers 38 an dem Zwischenstück 24 werden wieder Verbindungsschrauben verwendet, welche den Langlöchern 30 entsprechende Langlöcher des Schneidenträgers durchgreifen und in die Gewindebohrungen 32 eingeschraubt werden.

Aufgrund der beschriebenen Konstruktion ergibt sich die Möglichkeit, einerseits das Zwischenstück 24 in radialer Richtung gegenüber der Grundplatte 16 zu verstellen und andererseits den Schneidenträger 38 in radialer Richtung gegenüber dem Zwischenstück 24 zu verstellen, so daß für die Position des Schneidenträgers 38 bzw. der daran angebrachten Schneide 42 ein erheblicher radialer Stellweg zur Verfügung steht, wobei die verschiedenen Kerbverzahnungen 18, 26, 28, 40 einander auch in der äußersten radialen Position des Schneidenträgers 38 noch so weit überdecken, daß eine stabile Halterung des Schneidenträgers bzw. eine exakte Positionierung der daran vorgesehenen Schneide 42 gewährleistet ist.Weiterhin läßt sich die Dicke des Zwischenstücks 24 entsprechend den Erfordernissen so variieren, daß die am Schneidenträger 38 vorgesehene Schneide in die gewünschte axiale Position gebracht werden kann. Außerdem kann bei mehreren mit derselben Grundplatte zu verbindenden Schneidenträgern bei einem der Schneidenträger das Zwischenstück 24 unter Umständen weggelassen werden, wie dies in Fig. 1 für einen Schneidenträger 38' gezeigt ist. Vorausgesetzt natürlich, daß die für den betreffenden Schneidenträger geforderte radiale Position mit der erforderlichen Stabilität durch Zusammenwirken der Kerbverzahnungen 18 und 40 erreicht werden kann.

Aus der vorstehenden Beschreibung wird deutlich, daß die der Erfindung zugrunde liegende Aufgabe gelöst wird und daß ein neuer Werkzeugträger geschaffen wird, welcher hinsichtlich der radialen Positionierung des bzw. der Schneidenträger eine erhöhte Flexibilität bietet. Andererseits macht die vorstehende Beschreibung auch deutlich, daß als eigentlicher Erfindungsgegenstand auch das Zwischenstück selbst angesehen werden kann, welches in Verbindung mit einem Werkzeugträger gemäß der eingangs erwähnten DE-PS 31 30 229 verbesserte Möglichkeiten zur radialen und/oder axialen Positionierung eines Schneidenträgers bezüglich der Grundplatte des Werkzeugträgers ermöglicht.

## Patentansprüche

1. Werkzeugträger (10) insbesondere für ein Mehrschneidenwerkzeug, mit einer im Gebrauch zu einer Drehbewegung antreibbaren, eine zentrale Befestigungsöffnung, insbesondere eine Gewindebohrung aufweisenden Grundplatte (16) mit einer Kerbverzahnung (18) an einer Grundplattenfläche, mit einem eine Kerbverzahnung (40) aufweisenden Schneidenträger (38) und mit Verbindungsschrauben (34, 36) zum Herstellen einer starren, lösbaren Verbindung zwischen der Grundplatte und dem Schneidenträger (38) unter Ausnutzung der Positionierwirkung von ineinander greifenden Kerbverzahnungsbereichen (18, 26, 28, 40), wobei zum Zweck der radialen Verstellung des Schneidenträgers (38) gegenüber der Grundplatte (16) ein in Verstellrichtung verlaufendes Langloch (30), welches von einer Verbindungsschraube durchgriffen wird, in einem der zu verbindenden Elemente (16, 24, 38) vorgesehen ist, dadurch gekennzeichnet, daß ein plattenförmiges, zwei Hauptflächen aufweisendes Zwischenstück (24) vorgesehen ist, dessen an seiner einen Hauptfläche vorgesehene Kerbverzahnung (28) mit der Kerbverzahnung (18) der Grundplatte (16) und dessen an seiner anderen Hauptfläche vorgesehene Kerbverzahnung (26) mit der Kerbverzahnung (40) des Schneidenträgers (38) in Eingriff steht, wobei das Zwischenstück (24) einerseits mit der Grundplatte (16) und andererseits mit dem Schneidenträger (38) unabhängig voneinander lösbar verbunden ist.

2. Werkzeugträger nach Anspruch 1, dadurch gekennzeichnet, daß die mit den Kerbverzahnungen (26, 28) versehenen Hauptflächen des Zwischenstücks (24) parallel zueinander verlaufen.

3. Werkzeugträger nach Anspruch 1 oder 2, dadurch gekennzeichnet, daß das in Verstellrichtung verlaufende Langloch (30) am Zwischenstück (24) und/oder am Schneidenträger (38) vorgesehen ist.

4. Werkzeugträger nach Anspruch 3, dadurch gekennzeichnet, daß am Zwischenstück (24) und am Schneidenträger (38) jeweils zwei Langlöcher vorgesehen sind.

5. Werkzeugträger nach einem der Ansprüche 1 bis 4, dadurch gekennzeichnet, daß das Zwischenstück (24) zwei beidseitig mit Kerbverzahnungen (26, 28) versehene Teile (24a, 24b) aufweist, die über einen in axialer Richtung abgewinkelten Verbindungssteg (24c) miteinander verbunden sind, in dem ein Gewinde (34) vorgesehen ist, dessen Achse in radialer Richtung verläuft und in das eine Stellschraube (36) zum radialen Positionieren des Zwischenstücks (24) bezüglich des Grundkörpers (16) einschraubbar ist.

6. Werkzeugträger nach einem der Ansprüche 1 bis 5, dadurch gekennzeichnet, daß das Zwischenstück (24) ein Element eines Satzes von mehreren Zwischenstücken (24) unterschiedlicher Dicke ist.

## Claims

1. Tool holder (10), in particular for a tool having a plurality of cutting edges, comprising a base plate (16) capable of being rotated during use and having a central attachment opening, in particular a threaded bore, a serration (18) on a face of said base plate, a cutting edge support (38) having a serration (40) and connecting screws (34, 36) for providing a rigid, releasable connection between the base plate and the cutting edge support (38) utilizing the positioning effect of serrated regions (18, 26, 28, 40) engaging in one another, wherein for the purpose of radially adjusting the cutting edge support (38) relative to the base plate (16) at least one elongated hole (30) extending in the direction of adjustment and having a connecting screw passing therethrough is provided in one of the elements (16, 24, 38) to be connected, characterized in that a plate-like intermediate member (24) having two main faces is provided, the serration (28) provided on its one main face engaging the serration (18) of the base plate (16) and the serration (26) provided on its other main face engaging the serration (40) of the cutting edge support (38), said intermediate member (24) being releasably connected on the one hand with the base plate (16) and on the other hand with the cutting edge support (38), said connections being independent of one another.

2. Tool holder as defined in claim 1, characterized in that the main faces of the intermediate member (24) provided with the serrations (26, 28) extend parallel to one another.

3. Tool holder as defined in claims 1 or 2, characterized in that the elongated hole (30) extending in the direction of adjustment is provided on the intermediate member (24) and/or on the cutting edge support (38).

4. Tool holder as defined in claim 3, characterized in that two elongated holes are provided on both the intermediate member (24) and the cutting edge support (38).

5. Tool holder as defined in any of claims 1 to 4, characterized in that the intermediate member (24) has two portions (24a, 24b) provided on both sides with serrations (26, 28) and connected with one another via a connecting web (24c) bent in axial direction, said web being provided with a thread (34) having an axis extending in radial direction, a setscrew (36) being screwed into said thread for radially positioning the intermediate member (24) relative to the base plate (16).

6. Tool holder as defined in any of claims 1 to 5, characterized in that the intermediate member (24) is one element of a set of several intermediate members (24) having differing thicknesses.

## Revendications

1. Porte-outil (10), notamment pour un outil à plusieurs tranchants, comportant: une plaque de base (16) pouvant être entraînée en rotation lors de l'utilisation et présentant une ouverture centrale de fixation, notamment un trou fileté; une denture à cannelures (18) sur une surface de la plaque de base; un support de tranchant (38) présentant une denture à cannelures; et des vis d'assemblage (34, 36) pour réaliser une liaison rigide amovible entre la plaque de base et le support de tranchant (38) en tirant parti de l'effet de positionnement de régions de dentures à cannelures (18, 26, 28, 40) mutuellement en prise, au moins un trou (30) allongé dans la direction du déplacement de réglage, traversé par une vis d'assemblage, étant prévu pour le réglage radial du support de tranchant (38) par rapport à la plaque de base (16), caractérisé par le fait qu'il est prévu une pièce intermédiaire (24) en forme de plaque, présentant deux surfaces principales, dont la denture à cannelures (28) prévue sur sa première surface principale est en prise avec la denture à cannelures (18) de la plaque de base (16), et dont la denture à cannelures (26) prévue sur son autre surface principale est en prise avec la denture à cannelures (40) du support de tranchant (38), la pièce intermédiaire (24) étant amoviblement assemblée à la plaque de base (16), d'une part, et au support de tranchant (38), d'autre part, cela à chaque fois indépendamment.

2. Porte-outil selon revendication 1, caractérisé par le fait que les surfaces principales de la pièce intermédiaire (24) munies des dentures à cannelures (26, 28) sont mutuellement parallèles.

3. Porte-outil selon revendication 1 ou 2, caractérisé par le fait que le trou (30) allongé dans la direction du déplacement de réglage est prévu sur la pièce intermédiaire (24) et/ou sur le support de tranchant (38).

4. Porte-outil selon revendication 3, caractérisé par le fait que deux trous allongés sont prévus à chaque fois sur la pièce intermédiaire (24) et sur le support de tranchant (38).

5. Porte-outil selon l'une des revendications 1 à 4, caractérisé par le fait que la pièce intermédiaire (24) présente deux parties (24a, 24b) munies des deux côtés de dentures à cannelures (26, 28), ces parties étant réunies par une âme de liaison (24c) qui forme coude en direction axiale et dans laquelle est prévu un filetage (34) dont l'axe suit une direction radiale et dans lequel une vis de réglage (36) peut être vissée pour le positionnement radial de la pièce intermédiaire (24) par rapport au corps de base (16).

6. Porte-outil selon l'une des revendications 1 à 5, caractérisé par le fait que la pièce intermédiaire (24) est un élément d'un ensemble de plusieurs pièces intermédiaires (24) d'épaisseurs différentes.

# Fig.1

# Fig.3

# Fig.4

# Fig.2